# EUROPÄISCHE PATENTSCHRIFT

(11) **EP 1 110 986 B1**
(45) Veröffentlichungstag und Bekanntmachung des Hinweises auf die Patenterteilung: **08.06.2005**
(21) Anmeldenummer: 00126549.5
(22) Anmeldetag: 12.12.2000
(51) Int. Cl.: C08G 18/69, C08L 19/00

(54) **Kautschukmischungen auf Basis von unvernetzten Kautschuken und vernetzten Kautschukpartikeln sowie multifunktionellen Isocyanaten**
Rubber mixtures based on non-crosslinked rubbers and crosslinked rubber particles and multifunctional isocyanates
Composition de caoutchouc à base de caoutchoucs non-réticulés et de particules de caoutchouc réticulées et des isocyanates multifonctionnels

(30) Priorität: 24.12.1999 DE 19962862
(43) Veröffentlichungstag der Anmeldung: 27.06.2001
(73) Patentinhaber: Bayer Aktiengesellschaft, 51368 Leverkusen (DE)
(72) Erfinder: Obrecht, Werner, Dr., 47447 Moers (DE); Mezger, Martin, Dr., 51399 Burscheid (DE)

(56) Entgegenhaltungen:
- EP-A- 1 048 692
- US-A- 4 785 071
- US-A- 5 232 531
- PATENT ABSTRACTS OF JAPAN vol. 007, no. 066 (C-157), 18. März 1983 (1983-03-18) & JP 57 212239 A (YOKOHAMA GOMU KK), 27. Dezember 1982 (1982-12-27)
- DATABASE WPI Section Ch, Week 199312 Derwent Publications Ltd., London, GB; Class A12, AN 1993-096315 XP002164474 & JP 05 017630 A (YOKOHAMA RUBBER CO LTD), 26. Januar 1993 (1993-01-26)

## Beschreibung

Die vorliegende Erfindung betrifft Kautschukmischungen auf Basis von unvernetzten Kautschuken und vernetzten Kautschukpartikeln (sogenannten Kautschukgelen) sowie multifunktionellen Isocyanaten. Die erfindungsgemäßen Kautschukmischungen eignen sich zur Herstellung von Kautschukvulkanisaten, die eine vorteilhafte Kombination mechanischer Eigenschaften aufweisen, wie Spannungswert bei 300 % Dehnung, Bruchdehnung, Reißfestigkeit und Abriebwiderstand. Darüber hinaus besitzen die aus den erfindungsgemäßen Kautschukmischungen hergestellten Vulkanisate eine niedrigere Dichte, was sich vorteilhaft auf das Gewicht der aus den Vulkanisaten hergestellten Kautschukformkörpern, insbesondere Reifen bzw. Reifenteile, auswirkt.

Es ist bekannt, dass Kautschukmischungen aus unvernetzten Kautschuken und vernetzten Kautschukpartikeln (Kautschukgele) als Füllstoffe bei der Vulkanisation mit üblichen Vulkanisationsmitteln (z.B. Schwefelvulkanisation) Vulkanisate ergeben, die niedrige Rückprallelastizitäten bei Raumtemperatur (gutes Nassrutschverhalten) und hohe Rückprallelastizitäten bei 70°C (niedriger Rollwiderstand) ergeben.

Verwiesen wird in diesem Zusammenhang beispielsweise auf US-A 5 124 408, US-A 5 395 891, DE-A 197 01 488.7, DE-A 197 01 487.9, DE-A 199 29 347.3, DE-A 199 39 865.8, DE-A 199 42 620.1.

Für den technischen Einsatz ist die Verstärkungswirkung der Mikrogele in Vulkanisaten (Spannungswert bei 300 % Dehnung -S₃₀₀-, Bruchdehnung -D-, Reißfestigkeit und Abrieb) nicht ausreichend. Dies zeigt sich insbesondere daran, dass zur Einstellung technisch relevanter S₃₀₀-Werte hohe Gelmengen eingesetzt werden müssen. Durch diese hohen Gelmengen kommt es zu einer Überfüllung der Mischungen, wodurch die Reißfestigkeiten und die Bruckdehnungen der Vulkanisate abfallen. Es bestand daher die technische Notwendigkeit, Maßnahmen zur Erhöhung des Spannungswerts niedriggefullter gelhaltiger Kautschukvulkanisate zu finden. Außerdem bestand die technische Notwendigkeit zur Reduktion des DIN-Abriebs.

Weiterhin ist bekannt, Naturkautschuk mit Ruß als Füllstoff mit Diisocyanaten zu vulkanisieren. Die auf diese Weise erhaltenen Vulkanisate besitzen jedoch nicht befriedigende mechanische Eigenschaften; außerdem haften die Vulkanisate sehr stark an den Metallteilen der benutzten Vulkanisierformen (O. Bayer, Angewandte Chemie, Ausgabe A, 59. Jahrgang, Nr. 9, S. 257-288, September 1947).

Es bestand nun die Aufgabe, Kautschukmischungen zur Verfügung zu stellen, die die Herstellung von Vulkanisaten mit verbesserten mechanischen Eigenschaften (Produkt aus Spannungswert bei 300 % Dehnung und Bruchdehnung) sowie einer niedrigen Vulkanisatdichte ermöglichen, was beispielsweise bei Reifen bzw. einzelnen Reifenbauteilen erwünscht ist.

Gegenstand der vorliegenden Erfindung sind daher Kautschukmischungen bestehend aus den in Anspruch 1 näher definierten nicht vernetzten, doppelbindungshaltigen Kautschuken (A), vernetzten Kautschukpartikeln (B) sowie multifunktionellen Isocyanaten (C), wobei, jeweils bezogen auf 100 Gew.-Teile (phr) der Kautschukkomponente (A), der Anteil in der Mischung an Komponente (B) 1 bis 150 Gew.-Teile und der Anteil an multifunktionellen Isocyanaten (Komponente C) 1 bis 100 Gew.-Teile beträgt.

Bevorzugte, erfindungsgemäße Kautschukmischungen sind solche, die jeweils bezogen auf 100 Gew.-Teile der Kautschukkomponente (A) 5 bis 100 Gew.-Teile an vernetzten Kautschukpartikeln (Komponente B) und 3 bis 50 Gew.-Teile an multifunktionellen Isocyanaten (Komponente C) besitzen.

Unter doppelbindungshaltigen Kautschuken versteht man solche Kautschuke, die nach DIN/ISO 1629 als R-Kautschuke bezeichnet werden. Diese Kautschuke haben in der Hauptkette eine Doppelbindung. Hierzu gehören beispielsweise:
- NR:: Naturkautschuk
- SBR:: Styrol/Butadienkautschuk
- BR:: Polybutadienkautschuk
- NBR:: Nitrilkautschuk
- IIR:: Butylkautschuk
- BIIR:: bromierte Isobutylen/Isopren-Copolymerisate mit Bromgehalten von 0,1-10 Gewichtsprozent
- CIIR:: chlorierte Isobutylen/Isopren-Copolymerisate mit Bromgehalten von 0,1-10 Gewichtsprozent
- HNBR:: Hydrierter bzw. teilhydrierter Nitrilkautschuk
- SNBR:: Styrol/Butadien/Acrylnitril-Kautschuk
- CR:: Polychloropren
- ENR:: Epoxydierter Naturkautschuk oder Mischungen davon
- X-NBR:: carboxylierte Nitrilkautschuke
- X-SBR:: carboxylierte Styrol-Butadien-Copolymerisate.

Unter doppelbindungshaltigen Kautschuken sollen aber auch solche Kautschuke verstanden werden, die nach DIN/ISO 1629 als M-Kautschuke bezeichnet werden und neben der gesättigten Hauptkette Doppelbindungen in der Seitenkette aufweisen. Hierzu gehört z.B. EPDM.

Die in die erfindungsgemäßen Kautschukmischungen einzusetzenden doppelbindungshaltigen Kautschuke der oben genannten Art können selbstverständlich durch solche funktionelle Gruppen modifiziert sein, die mit den einzusetzenden funktionellen Isocyanaten zu reagieren vermögen und - wie nachfolgend noch beschrieben wird - eine Ankopplung der vernetzten Kautschukpartikel an die umgebende Kautschukmatrix im vulkanisierten Zustand zu verbessern vermögen.

Besonders bevorzugt sind insbesondere solche nicht vernetzten Kautschuke, die durch Hydroxyl-, Carboxyl-, Amino- und/oder Amidgruppen funktionalisiert sind.

Die Einführung funktioneller Gruppen kann direkt bei der Polymerisation durch Copolymerisation mit geeigneten Comonomeren oder nach der Polymerisation durch Polymermodifikation erfolgen.

Die Einführung solcher funktioneller Gruppen durch Polymermodifikation ist bekannt und beispielsweise beschrieben in M.L. Hallensleben "Chemisch modifizierte Polymere" in Houben-Weyl Methoden der Organischen Chemie, 4. Auflage, "Makromolekulare Stoffe" Teil 1-3; Georg Thieme Verlag Stuttgart, New York, 1987; S. 1994-2042, DE-A 2 653 144, EP-A 464 478, EPA 806 452 und Deutsche Patentanmeldung Nr. 198 32 459.6.

Die Menge an funktionellen Gruppen in den Kautschuken beträgt üblicherweise 0,05 bis 2,5 Gew.-%, bevorzugt 0,1 bis 10 Gew.-%.

Als vernetzte Kautschukpartikel, sogenannte Kautschukgele, werden in die erfindungsgemäßen Gemische insbesondere solche eingesetzt, die durch entsprechende Vernetzung folgender Kautschuke erhalten wurden:
- BR:: Polybutadien,
- ABR:: Butadien/Acrylsäure-C1-4Alkylestercopolymere,
- IR:: Polyisopren,
- SBR:: Styrol-Butadien-Copolymerisate mit Styrolgehalten von 1-60, vorzugsweise 5-50 Gewichtsprozent,
- X-SBR:: carboxlylierte Styrol-Butadien-Copolymerisate
- FKM:: Fluorkautschuk,
- ACM:: Acrylatkautschuk,
- NBR:: Polybutadien-Acrylnitril-Copolymerisate mit Acrylnitrilgehalten von 5-60, vorzugsweise 10-50 Gewichtsprozent,
- X-NBR:: carboxlierte Nitrilkautschuke
- CR:: Polychloropren
- IIR:: Isobutylen/Isopren-Copolymerisate mit Isoprengehalten von 0,5-10 Gewichtsprozent,
- BIIR:: bromierte Isobutylen/Isopren-Copolymerisate mit Bromgehalten von 0,1-10 Gewichtsprozent,
- CIIR:: chlorierte Isobutylen/Isopren-Copolymerisate mit Bromgehalten von 0,1-10 Gewichtsprozent,
- HNBR:: teil- und vollhydrierte Nitrilkautschuke
- EPDM:: Ethylen-Propylen-Dien-Copolymerisate,
- EAM:: Ethylen/Acrylatcopolymere,
- EVM:: Ethylen/Vinylacetatcopolymere
- CO und ECO:: Epichlorhydrinkautschuke,
- Q:: Silikonkautschuke,
- AU:: Polyesterurethanpolymerisate,
- EU:: Polyetherurethanpolymerisate.
Die erfindungsgemäß einzusetzenden Kautschukpartikel besitzen Teilchendurchmesser von 5 bis 1000 nm, bevorzugt 10 bis 600 nm (Durchmesserangaben nach DIN 53 206). Aufgrund ihrer Vernetzung sind sie unlöslich und in geeigneten Fällmitteln, z.B. Toluol, quellbar. Die Quellungsindizes der Kautschukpartikel (Qᵢ) in Toluol betragen 1 bis 15, vorzugsweise 1 bis 10. Der Quellungsindex wird aus dem Gewicht des lösungsmittelhaltigen Gels (nach Zentrifugation mit 20 000 Upm) und dem Gewicht des trockenen Gels berechnet, wobei Qᵢ = Nassgewicht des Gels/Trockengewicht des Gels bedeutet. Der Gelgehalt der erfindungsgemäßen Kautschukpartikel beträgt üblicherweise 80 bis 100 Gew.-%, bevorzugt 90 bis 100 Gew.-%.

Die Herstellung der einzusetzenden vernetzten Kautschukpartikel (Kautschukgele) aus den zugrundeliegenden Kautschuken der zuvor genannten Art, ist prinzipiell bekannt und beispielsweise beschrieben in US-A 5 395 891 und EP-A 981 000 49.0.

Außerdem ist es möglich, die Teilchengrößen der Kautschukpartikel durch Agglomeration zu vergrößern. Auch die Herstellung von Kieselsäure/Kautschuk-Hybridgelen durch Coagglomeration ist beispielsweise beschrieben in der deutschen Patentanmeldung Nr. 199 39 865.8.

Selbstverständlich können die vernetzten Kautschukpartikel wie die zuvor erwähnten nicht vernetzten doppelbindungshaltigen Kautschuke ebenfalls durch geeignete funktionelle Gruppen modifiziert sein, die - wie zuvor erwähnt - mit den einzusetzenden multifunktionellen Isocyanaten zu reagieren vermögen und/oder eine Verbesserung der Ankopplung der Kautschukpartikel an die umgebende Kautschukmatrix im vulkanisierten Zustand bewirken.

Als bevorzugte funktionelle Gruppen sind wiederum zu nennen die Hydroxyl-, Carboxyl-, Amino- und/oder Amidgruppen. Der mengenmäßige Anteil dieser funktionellen Gruppen entspricht dem Anteil dieser Gruppen bei den zuvor genannten und nicht vernetzten, doppelbindungshaltigen Kautschuken.

Die Modifizierung der vernetzten Kautschukpartikeln (Kautschukgelen) und die Einführung der zuvor genannten funktionellen Gruppen ist dem Fachmann ebenfalls bekannt und beispielsweise beschrieben in den deutschen Patentanmeldungen Nr. 199 19 459.9, 199 29 347.3, 198 34 804.5.

Zu erwähnen sei an dieser Stelle nur die Modifizierung der entsprechenden Kautschuke in wässriger Dispersion mit entsprechenden polaren Monomeren, die eine Hydroxyl-, Amino-, Amid- und/oder eine Carboxylgruppe in die Kautschuke einzuführen vermögen.

Besonders bevorzugt werden in die erfindungsgemäßen Kautschukmischungen modifizierte vernetzte Kautschukpartikel eingesetzt, die an der Oberfläche durch -OH; -COOH; -NH₂; -CONH₂; -CONHR-Gruppen modifiziert sind und in dem zuvor erwähnten Mengenbereich liegen.

Als multifunktionelle Isocyanate (Komponente C) eignen sich für die erfindungsgemäßen Kautschukmischungen Isocyanate mit zwei oder mehr, bevorzugt 2, 3 und 4-Isocyanatgruppen im Molekül. Hierfür kommen die bekannten aliphatischen, cycloaliphatischen, aromatischen, oligomeren und polymeren multifunktionellen Isocyanate in Frage. Ein Vertreter der aliphatischen multifunktionellen Isocyanate ist z.B. Hexamethylendiisocyanat (HDI); ein Vertreter der cycloaliphatischen multifunktionellen Isocyanate ist z.B. 1-Isocyanato-3-(isocyanatomethyl)-3,5,5-trimethylcyclohexan (Isophorondiisocyanat/IPDI). Als Vertreter der aromatischen multifunktionellen Isocyanate seien genannt: 2,4- und 2,6-Diisocyanatotoluol sowie das entsprechende technische Isomerengemisch (TDI); Diphenylmethandiisocyanate, wie Diphenylmethan-4,4'-diisocyanat, Diphenylmethan-2,4'-diisocyanat, Diphenylmethan-2,2'-diisocyanat sowie die entsprechenden technischen Isomerengemische (MDI). Außerdem sind zu nennen Naphthalin-1,5-diisocyanat (NDI) sowie 4,4',4"-Triisocyanatotriphenylmethan.

Zur Erniedrigung des Dampfdrucks und zur Vermeidung einer vorzeitigen Vernetzungsreaktion, z.B. bei der Mischungsherstellung (Reduktion der Scorchanfälligkeit der Mischungen) kann es notwendig sein, die multifunktionellen Isocyanate in modifizierter Form einzusetzen. Die wichtigsten Modifizierungsvarianten sind die Dimerisierung und die Trimerisierung sowie die reversible Blockierung insbesondere die temperaturreversible Blockierung (Verkappung) der Isocyanatgruppen mit speziellen Alkoholen, Phenolen, Caprolactamen, Oximen oder β-Dicarbonylverbindungen der bekannten Art.

Die erfindungsgemäßen Kautschukmischungen können weitere bekannte Kautschukhilfsmittel und Füllstoffe enthalten. Besonders geeignete Füllstoffe zur Herstellung der erfindungsgemäßen Kautschukmischungen bzw. Vulkanisate sind z.B.:
- Ruße. Die hierbei zu verwendenden Ruße sind nach dem Flammruß-, Furnace- oder Gasrußverfahren hergestellt und besitzen BET-Oberflächen von 20-200 m²/g wie z.B: SAF-, ISAF-, IISAF-, HAF-, FEF- oder GPF-Ruße.
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primärteilchengrößen von 5-400 nm. Die Kieselsäuren können ggf. auch als Mischoxide mit anderen Metalloxiden, wie Al-, Mg-, Ca-, Ba, Zn- und Ti Oxiden vorliegen.
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm.
- natürliche Silikate, wie Kaolin und andere natürlich vorkommende Kieselsäuren.
- Metalloxide, wie Zinkoxid, Calciumoxid, Magnesiumoxid, Aluminiumoxid.
- Metallcarbonate, wie Calciumcarbonat, Magnesiumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid).

Die Füllstoffe können in Mengen von 0,1 bis 100 Gew.-Teilen, bezogen auf 100 Gew.-Teile der Kautschukkomponente A eingesetzt werden.

Die genannten Füllstoffe können allein oder im Gemisch untereinander eingesetzt werden.

Besonders bevorzugt sind Kautschukmischungen, die 10 bis 100 Gew.-Teile an vernetzten Kautschukpartikeln (Komponente B), 0,1 bis 100 Gew.-Teile Ruß und/oder 0,1 bis 100 Gew.-Teilen an sogenannten hellen Füllstoffen der oben genannten Art, jeweils bezogen auf 100 Gew.-Teile der Kautschukkomponente A, enthalten. Dabei beträgt die Menge an Füllstoffen bei Einsatz eines Gemisches aus Ruß und hellen Füllstoffen maximal ca. 100 Gew.-Teile.

Die erfindungsgemäßen Kautschukmischungen können - wie erwähnt - weitere Kautschukhilfsmittel enthalten, wie Vernetzer, Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie Triethanolamin, Polyethylenglykol, Hexantriol, Bis-(triethoxysilylpropyl)-tetrasulfid. Die Kautschukhilfsmittel sind beispielsweise beschrieben in J. van Alphen, W.J.K. Schönbau, M. van Tempel Gummichemikalien, Berliner Union GmbH Stuttgart 1956 sowie in Handbuch für die Gummiindustrie, Bayer AG, 2. Auflage, 1991.

Die Kautschukhilfsmittel werden in üblichen Mengen, die sich u.a. nach dem Verwendungszweck richten, eingesetzt. Übliche Mengen sind beispielsweise 0,1 bis 50 Gew.-Teile, bezogen auf 100 Gew.-Teile Kautschuk (A).

Darüber hinaus können die erfindungsgemäßen Kautschukmischungen noch übliche Vernetzer wie Schwefel, Schwefelspender, Peroxide oder andere Vernetzungsmittel, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat enthalten. Außerdem kommen noch in Betracht die Acrylate und Methacrylate von mehrwertigen, vorzugsweise 2 bis 4-wertigen C₂- bis C₁₀-Alkoholen, wie Ethylenglykol, Propandiol-1,2-butandiol, Hexandiol, Polyethylenglykol mit 2 bis 20, vorzugsweise 2 bis 8, Oxyethyleneinheiten, Neopentylglykol, Bisphenol-A, Glycerin, Trimethylpropan, Pentaerythrit, Sorbit mit ungesättigten Polyestern aus aliphatischen Di- und Polyolen sowie Maleinsäure, Fumarsäure und/oder Itaconsäure.

Bevorzugt werden als Vernetzer eingesetzt Schwefel und Schwefelspender in den bekannten Mengen, beispielsweise in Mengen von 0,1 bis 10, bevorzugt 0,5 bis 5, bezogen auf 100 Gew.-Teile an Kautschukkomponente (A).

Die erfindungsgemäßen Kautschukmischungen können darüber hinaus noch Vulkanisationsbeschleuniger der bekannten Art enthalten, wie Mercaptobenzothiazole, Mercaptosulfenamide, Guanidine, Thiurame, Dithiocarbamate, Thioharnstoffe, Thiocarbonate und/oder Dithiophosphate. Die Vulkanisationsbeschleuniger werden ebenso wie die Vernetzer in Mengen von ca. 0,1 bis 10 Gew.-Teilen, bevorzugt 0,1 bis 5 Gew.-Teilen, bezogen auf 100 Gew.-Teile an Kautschukkomponente (A) eingesetzt.

Die erfindungsgemäßen Kautschukmischungen können in bekannter Weise hergestellt werden, beispielsweise durch Vermischen der festen Einzelkomponenten in den dafür geeigneten Aggregaten, wie Walzen, Innenmischern oder Mischextrudern. Die Abmischung der einzelnen Komponenten miteinander erfolgt üblicherweise bei Mischtemperaturen von 20 bis 100°C.

Die erfindungsgemäßen Kautschukmischungen können auch hergestellt werden, indem man aus den Latices der Kautschukkomponente (A) die Komponente (B) in Latexform und die anderen Komponenten in die Latexmischung (Komponenten A+B) einmischt und anschließend durch übliche Operationen, wie Eindampfen, Ausfällen oder Gefrier-Koagulation aufarbeitet.

Ziel bei der Herstellung der erfindungsgemäßen Kautschukmischung ist vor allem, dass die Mischungskomponenten innig miteinander vermischt werden und eine gute Dispersion der eingesetzten Füllstoffe in der Kautschukmatrix erreicht wird.

Die erfindungsgemäßen Kautschukmischungen eignen sich zur Herstellung von Kautschukvulkanisaten durch entsprechende Vernetzungsreaktionen mit den bekannten Vernetzungsagenzien und dienen zur Herstellung von Formkörpern aller Art, insbesondere zur Herstellung von Kabelmänteln, Schläuchen, Treibriemen, Förderbändern, Walzenbeschlägen, Reifenbauteilen, Schuhsohlen, Dichtungsringen, Dämpfungselementen sowie Membranen.

### Beispiele

### Herstellung der Kautschukmikrogele

### A) Mikrogel (1):

Mikrogel (1) ist ein SBR-Gel mit einem Styrolanteil von 24 Gew.-%. Es wird in der erfindungsgemäßen Kautschukmischung in Form eines Masterbatches eingesetzt mit einem Anteil von 50 Gew.-% NR-Kautschuk.

Gel (1) wird durch Nachvemetzung eines SBR-Latex mit einem Styrolanteil von 24 Gew.-% (Baystal BL 1357® der Firma Bayer France, Pôrt Jérôme) mit 1,5 phr Dicumylperoxid hergestellt. Die Vernetzungsreaktion und die Aufarbeitung erfolgten gemäß dem Beispiel 1 von EP-A 0 854 170. Das Mikrogel (1) besaß einen Durchmesser von 60 nm, der Quellungsindex in Toluol betrug 5.

### B) Mikrogel (2):

Mikrogel (2) ist ein SBR-Gel mit einem Styrolanteil von 24 Gew.-%, das mit Hydroxyethylmethacrylat oberflächenmodifiziert wurde.

Das Gel (2) wurde durch Umsetzung bzw. Modifikation eines mit 3 phr Hydroxyethylmethacrylat (HEMA) nachvemetzten SBR-Latex (siehe hierzu Gel (1)) hergestellt.

Für die Modifikation legte man den mit 1,5 phr Dicumylperoxid nachvernetzten SBR-Latex (Baystal BL 1357®) in einem Kolben vor und verdünnte den Latex mit Wasser, so dass der Feststoffgehalt des Latex bei 20 Gew.-% lag. Nach dem Zusatz von 3 phr 97 %igem Hydroxymethylmethacrylat, bezogen auf den Latexfeststoffgehalt, und der Zugabe von 0,12 phr 50 %igem p-Methanhydroperoxid erhitzte man unter Rühren die Reaktionsmischung auf 70°C und rührte 1 Stunde bei dieser Temperatur nach. Man gab dann innerhalb von 1 Stunde 0,05 Gew.-%, bezogen auf den Latexfeststoffgehalt, einer wässrigen 0,5 gew.-%igen Lösung des Natriumsalzes von 1-Hydroxymethansulfinsäure-dihydrat (Rongalit® der Fa. BASF) dem Gemisch zu. Während der gesamten Reaktion hielt man den pH-Wert durch Zugabe von 1 N Natronlauge konstant, und zwar auf pH 9. Nach einer Reaktionszeit von 1 Stunde bei 70°C hatte der Latex einen Polymerisationsumsatz von 90 %. Die Dichte der Latexteilchen betrug 0,987 g/cm³. Die Teilchendurchmesser betrugen: d₁₀ = 46 nm; d₅₀ = 52 nm; d₈₀ = 57 nm.

Vor der Fällung des modifizierten SBR-Latex rührte man in den Latex zusätzlich die nachfolgend aufgeführte Alterungsschutzmittel jeweils in den angegebenen Mengen, bezogen auf 100 Gew.-Teile Feststoff, ein:

| | |
|---|---|
| 0,05 phr | 2,2-Methylen-bis-(4-Methyl-6-cyclohexylphenol) (Vulkanox ZKF der Firma Bayer AG) |
| 0,22 phr | Di-t-Butyl-p-Kresol (Vulkanox KB der Firma Bayer AG) |
| 0,38 phr | Di-Laurylthiodipropionat (PS 800 der Firma Ciba Geigy AG). |

Zur Fällung von 5,035 kg eines 19,86 %igen mit Hydroxylgruppen modifizierten SBR-Latex legte man 6000 g Wasser, 795,6 g Kochsalz und 425 g Fällungsmittel (Superfloc® C567 (1 %ig) der Firma American Cyanamide Corporation) vor.

Man erhitzte die vorgelegten Fällungsmittel auf 60°C und stellte mit 10 gew.-%iger Schwefelsäure einen pH-Wert von 4 ein. Unter Einhaltung dieses pH-Wertes gab man den modifizierten Latex in das Fällungsagens. Man erhitzte nach Latexzugabe die Mischung auf 60°C und kühlte danach die Mischung durch Zugabe von kaltem Wasser auf ca. 30°C ab. Das dabei ausfallende Kautschukgel wurde mehrmals gewaschen und nach Filtration bei 70°C unter Vakuum bis zur Gewichtskonstanz getrocknet (ca. 60 Stunden).

Das erhaltene Gel (2) besaß einen Gelgehalt von 97 Gew.-%, wobei der Quellungsindex des vergelten Anteils 5,3 betrug. Die OH-Zahl des erhaltenen Gels (2) betrug 9 mg KOH pro Gramm Kautschukgel und die Glastemperatur T_{g} betrug -9,5°C.

### C) Kautschukgel (3):

Das Kautschukgel (3) ist ein SBR-Gel mit einem Styrolanteil von 40 Gew.-%, das mit Hydroxyethylmethacrylat oberflächenmodifiziert wurde.

Gel (3) wurde ausgehend von ölfreiem Krylene® 1721-Latex der Firma Bayer France (La Wantzenau) durch Nachvernetzung mit 1,0 phr Dicumylperoxid und durch anschließende Modifizierung mit 3 phr Hxydroxyethylmethacrylat hergestellt.

Die Modifizierung des Kautschukgels (3) mit Hydroxyethylmethacrylat erfolgte analog der Modifizierung des Kautschukgels (2).

Nach der Modifizierung betrug die Dichte der erhaltenen Latexteilchen 0,9947 g/cm³. Die Teilchendurchmesser betrugen: d₁₀ = 37 nm; d₅₀ = 53 nm; d₈₀ = 62 nm. Die Stabilisierung, Fällung und Trocknung des modifizierten Kautschukgels (3) wurde ebenfalls analog der Stabilisierung, Fällung und Trocknung des Gels (2) vorgenommen.

Der Gelgehalt des isolierten Kautschukgels (3) betrug 99 Gew.-% und der Quellungsindex des vergelten Anteils betrug 6,7. Die OH-Zahl betrug 7,9 mg KOH pro Gramm Kautschukgel. Die Glastemperatur des Gels betrug -12°C.

### Herstellung der Kautschukmischungen, deren Vulkanisation sowie die gemessenen physikalischen Werte der Vulkanisate

### Mischungsserie A:

Auf einer Laborwalze wurden die in der nachfolgenden Tabelle aufgeführten Mischungsbestandteile (Mengenangabe in phr) in üblicher Weise gemischt.

| Mischungs-Nr.: | 1 | 2 | 3 | 4 | 5 | 6 | 7 | 8 | 9 |
|---|---|---|---|---|---|---|---|---|---|
| Mastizierter Natur-Kautschuk¹⁾ | 100 | 50 | 60 | 70 | 80 | 100 | 100 | 100 | 100 |
| Unmodifiziertes SBR-Gel (M.-Batch KA8650/19) | - | 100 | 80 | 60 | 40 | - | - | - | - |
| Hydroxylmodifiziertes SBR-Gel (OBR 952) | - | - | - | - | - | 50 | 40 | 30 | 20 |
| Stearinsäure | 3,0 | 3,0 | 3,0 | 3,0 | 3,0 | 3,0 | 3,0 | 3,0 | 3,0 |
| Zinkoxid | 3,0 | 3,0 | 3,0 | 3,0 | 3,0 | 3,0 | 3,0 | 3,0 | 3,0 |
| Ozonschutzwachs²⁾ | 1,5 | 1,5 | 1,5 | 1,5 | 1,5 | 1,5 | 1,5 | 1,5 | 1,5 |
| IPPD³⁾ | 1,0 | 1,0 | 1,0 | 1,0 | 1,0 | 1,0 | 1,0 | 1,0 | 1,0 |
| TMQ⁴⁾ | 1,0 | 1,0 | 1,0 | 1,0 | 1,0 | 1,0 | 1,0 | 1,0 | 1,0 |
| Mineralöl-Weichmacher⁵⁾ | 3,0 | 3,0 | 3,0 | 3,0 | 3,0 | 3,0 | 3,0 | 3,0 | 3,0 |
| Schwefel | 1,6 | 1,6 | 1,6 | 1,6 | 1,6 | 1,6 | 1,6 | 1,6 | 1,6 |
| Beschleuniger TBBS⁶⁾ | 2 | 2 | 2 | 2 | 2 | 2 | 2 | 2 | 2 |
| Dimeres Toluylendiisocyanat⁷⁾ | 15 | 15 | 15 | 15 | 15 | 15 | 15 | 15 | 15 |

| | | | | | | | | | |
|---|---|---|---|---|---|---|---|---|---|
| ¹⁾ TSR 5, Defo 700 | | | | | | | | | |
| ²⁾ Mischung von Paraffinen und Mikrowachsen (Antilux® 654 der Rheinchemie Rheinau GmbH) | | | | | | | | | |
| ³⁾ N-Isopropyl-N'-phenyl-p-phenylendiamin (Vulkanox® 4010 NA der Bayer AG) | | | | | | | | | |
| ⁴⁾ 2,2,4-Trimethyl-1,2-dihydrochinolin (polym.) (Vulkanox® HS der Bayer AG) | | | | | | | | | |
| ⁵⁾ Enerthene® 1849-1 der Firma BP Oil GmbH | | | | | | | | | |
| ⁶⁾ N-tert.Butyl-2-benzthiazylsulfenamid (Vulkacit NZ® der Bayer AG) | | | | | | | | | |
| ⁷⁾ 1,3 Bis(3-isocyanato-4-methylphenyl)-1,3-diazetidin-2,4-dion (Desmodur TT® der Rheinchemie Rheinau GmbH | | | | | | | | | |

Die Vulkansiationsgeschwindigkeiten der Mischungen wurden in einem Rheometerexperiment bei 160 °C untersucht. Hierfür wurde das Monsantorheometer MDR 2000E verwendet. Mit Hilfe dieser Messungen wurden folgende charakteristische Daten ermittelt: Fₘᵢₙ; F_{max-Fmin}; t₁₀; t₈₀ und t₉₀.

| Mischungs-Nr.: | 1 | 2 | 3 | 4 | 5 | 6 | 7 | 8 | 9 |
|---|---|---|---|---|---|---|---|---|---|
| Fₘᵢₙ [dNM] | 0,54 | 1,06 | 0,91 | 0,79 | 0,63 | 1,75 | 1,46 | 0,98 | 0,77 |
| F_{max-Fmin} [dNM] | 24,2 | 27,01 | 26,14 | 25,53 | 25,12 | 30,95 | 29,69 | 29,67 | 28,77 |
| t₁₀ [min.] | 0,74 | 0,61 | 0,63 | 0,66 | 0,70 | 0,36 | 0,39 | 0,40 | 0,45 |
| t₈₀ [min.] | 15,23 | 18,47 | 18,15 | 17,63 | 17,00 | 19,75 | 18,87 | 17,91 | 17,86 |
| t₉₀ [min] | 17,60 | 21,40 | 21,08 | 20,59 | 19,74 | 23,04 | 21,93 | 20,85 | 20,49 |

Die Mischungen wurden 37 Minuten lang bei 160°C in der Presse vulkanisiert. An den Vulkanisaten wurden folgende physikalische Daten ermittelt:

| Mischungs-Nr.: | 1 | 2 | 3 | 4 | 5 | 6 | 7 | 8 | 9 |
|---|---|---|---|---|---|---|---|---|---|
| Zugfestigkeit (F) [MPa] | 25,7 | 24,9 | 27,1 | 27,5 | 26,7 | 25,8 | 27,5 | 28,7 | 27,1 |
| Bruchdehnung (D) [%] | 635 | 480 | 555 | 570 | 585 | 475 | 510 | 520 | 550 |
| Spannungswert bei 100 % Dehnung (S₁₀₀) [MPa] | 2,0 | 3,1 | 2,8 | 2,6 | 2,4 | 4,6 | 4,0 | 3,6 | 2,8 |
| Spannungswert bei 300 % Dehnung (S₃₀₀) [MPa] | 5,0 | 11,5 | 9,7 | 8,4 | 7,2 | 12,5 | 11,4 | 11,0 | 8,4 |
| Härte Shore A, 23°C | 66 | 75 | 73 | 72 | 70 | 78 | 76 | 75 | 73 |
| Härte Shore A, 70°C | 63 | 70 | 69 | 68 | 66 | 73 | 71 | 71 | 69 |
| Rückprallelastizität, 23°C [%] | 59 | 42 | 44 | 47 | 51 | 41 | 43 | 46 | 51 |
| Rückprallelastizität, 70°C [%] | 66 | 61 | 62 | 63 | 65 | 60 | 62 | 62 | 64 |
| Abrieb 60er Schmirgel [mm³] | 155 | 138 | 135 | 137 | 139 | 119 | 117 | 125 | 128 |
| S₃₀₀xD | 3.175 | 5.520 | 5.384 | 4.788 | 4.212 | 5.938 | 5.814 | 5.720 | 4.620 |

### Ergebnis:

Sowohl in Vulkanisaten mit unmodifiziertem als auch mit hydroxylmodifiziertem SBR-Gel werden bei Einsatz von 15 phr dimerem Toluylendiisocyanat höhere Härten, höhere Spannungswerte sowie niedrigere Abriebwerte als beim gelfreien Vulkanisat gefunden. Das Niveau der mechanischen Eigenschaften, charakterisiert durch das Produkt (S₃₀₀ xD) liegt sowohl bei den unmodifizierten als auch bei den hydroxylmodifizierten Gelen höher als beim gelfreien Vulkanisat.

### Mischungsserie B:

Auf einer Laborwalze wurden folgende Bestandteile der Kautschukmischung in der in der Tabelle angegebenen Reihenfolge (Mengenangaben in phr) gemischt.

| Mischungs-Nr.: | 1 | 2 | 3 | 4 | 5 | 6 | 7 | 8 |
|---|---|---|---|---|---|---|---|---|
| Mastizierter Naturkautschuk¹⁾ | 100 | 100 | 100 | 100 | 100 | 100 | 100 | 100 |
| Hydroxylmodifiziertes SBR-Gel (OBR 1026) | 40 | 40 | 40 | 40 | 40 | 40 | 40 | 40 |
| Stearinsäure | 3 | 3 | 3 | 3 | 3 | 3 | 3 | 3 |
| Zinkoxid | 3 | 3 | 3 | 3 | 3 | 3 | 3 | 3 |
| Ozonschutzwachs²⁾ | 1,5 | 1,5 | 1,5 | 1,5 | 1,5 | 1,5 | 1,5 | 1,5 |
| IPPD³⁾ | 1 | 1 | 1 | 1 | 1 | 1 | 1 | 1 |
| TMQ⁴⁾ | 1 | 1 | 1 | 1 | 1 | 1 | 1 | 1 |
| Mineralöl-Weichmacher⁵⁾ | 3 | 3 | 3 | 3 | 3 | 3 | 3 | 3 |
| Schwefel | 1,6 | 1,6 | 1,6 | 1,6 | 1,6 | 1,6 | 1,6 | 1,6 |
| Beschleuniger TBBS⁶⁾ | 2 | 2 | 2 | 2 | 2 | 2 | 2 | 2 |
| Dimeres Toluylendiisocyanat⁷⁾ | 5 | 10 | 15 | 20 | 25 | 30 | 35 | 40 |

| | | | | | | | | |
|---|---|---|---|---|---|---|---|---|
| ¹⁾ TSR 5, Defo 700 | | | | | | | | |
| ²⁾ Mischung von Paraffinen und Mikrowachsen (Antilux® 654 der Rheinchemie Rheinau GmbH) | | | | | | | | |
| ³⁾ N-Isopropyl-N'-phenyl-p-phenylendiamin (Vulkanox® 4010 NA der Bayer AG) | | | | | | | | |
| ⁴⁾ 2,2,4-Trimethyl-1,2-dihydrochinolin (polym.) (Vulkanox® HS der Bayer AG) | | | | | | | | |
| ⁵⁾ Enerthene® 1849-1 der Firma BP Oil GmbH | | | | | | | | |
| ⁶⁾ N-tert.Butyl-2-benzthiazylsulfenamid (Vulkacit NZ® der Bayer AG) | | | | | | | | |
| ⁷⁾ 1,3 Bis(3-isocyanato-4-methylphenyl)-1,3-diazetidin-2,4-dion (Desmodur TT® der Rheinchemie Rheinau GmbH | | | | | | | | |

Die Vulkansiationsgeschwindigkeiten der Mischungen wurden in einem Rheometerexperiment bei 160°C untersucht. Hierfür wurde das Monsantorheometer MDR 2000E verwendet. Mit Hilfe dieser Messungen wurden folgende charakteristische Daten ermittelt: Fₘᵢₙ; F_{max-Fmin}; t₁₀; t₈₀ und t₉₀.

| Mischungs-Nr.: | 1 | 2 | 3 | 4 | 5 | 6 | 7 | 8 |
|---|---|---|---|---|---|---|---|---|
| Fₘᵢₙ [dNM] | 0,85 | 1,01 | 1,16 | 1,23 | 1,34 | 1,26 | 1,41 | 1,39 |
| F_{max-Fmin} [dNM] | 8,07 | 12,57 | 21,85 | 24,86 | 22,45 | 16,87 | 13,16 | 11,27 |
| t₁₀ [min.] | 0,52 | 0,34 | 0,37 | 0,37 | 0,35 | 0,32 | 0,30 | 0,28 |
| t₈₀ [min.] | 11,68 | 15,42 | 14,53 | 17,38 | 17,23 | 16,80 | 18,31 | 20,78 |
| t₉₀ [min] | 12,88 | 16,62 | 16,69 | 20,69 | 20,05 | 19,46 | 22,50 | 26,42 |

Die Mischungen wurden bei 160°C in der Presse vulkanisiert:

| Mischungs-Nr.: | 1 | 2 | 3 | 4 | 5 | 6 | 7 | 8 |
|---|---|---|---|---|---|---|---|---|
| Vulkanisationszeit [min] | 8 | 8 | 8 | 6 | 6 | 6 | 6 | 6 |

An den Vulkanisaten wurden folgende Daten ermittelt:

| Mischungs-Nr.: | 1 | 2 | 3 | 4 | 5 | 6 | 7 | 8 |
|---|---|---|---|---|---|---|---|---|
| Zugfestigkeit (F) [MPa] | 19,9 | 20,9 | 25,1 | 21,6 | 20,9 | 19,5 | 18,9 | 18,4 |
| Bruchdehnung (D) [%] | 590 | 555 | 515 | 465 | 495 | 480 | 485 | 490 |
| Spannungswert bei 100 % Dehnung (S₁₀₀) [MPa] | 1,5 | 1,9 | 2,7 | 3,0 | 3,2 | 3,3 | 3,5 | 3,8 |
| Spannungswert bei 300 % Dehnung (S₃₀₀) [MPa] | 4,2 | 5,8 | 9,1 | 9,5 | 9,1 | 8,8 | 9,0 | 8,6 |
| Härte Shore A, 23°C | 52 | 59 | 70 | 73 | 74 | 72 | 72 | 72 |
| Härte Shore A, 70°C | 47 | 55 | 65 | 70 | 71 | 70 | 69 | 68 |
| Rückprallelastizität, 23°C [%] | 33 | 31 | 32 | 30 | 30 | 29 | 29 | 28 |
| Rückprallelastizität, 70°C [%] | 70 | 64 | 67 | 64 | 61 | 58 | 55 | 54 |
| Abrieb 60er Schmirgel [mm³] | 186 | 146 | 131 | 133 | 136 | 136 | 137 | 144 |
| S₃₀₀ xD | 2.478 | 3.219 | 4.685 | 4.417 | 4.505 | 4.224 | 4.365 | 4.214 |

### Ergebnis:

Bei Variation der Menge an dimeren Toluylendiisocyanat zwischen 5 phr - 40 phr wird bei einer Dosierung von 15 - 25 phr ein Optimum im Produkt S₃₀₀ xD gefunden.

### Mischungsserie C:

Auf einer Laborwalze wurden folgende Bestandteile der Kautschukmischung in der in der Tabelle angegebenen Reihenfolge (Mengenangaben in phr) gemischt.

| Mischungs-Nr.: | 1 | 2 | 3 | 4 | 5 | 6 | 7 | 8 |
|---|---|---|---|---|---|---|---|---|
| Mastizierter Naturkautschuk¹⁾ | 100 | 100 | 100 | 100 | 100 | 100 | 100 | 100 |
| Hydroxylmodifiziertes SBR-Gel (OBR 1031) | 30 | 30 | 30 | 30 | 30 | 30 | 30 | 30 |
| Stearinsäure | 3 | 3 | 3 | 3 | 3 | 3 | 3 | 3 |
| Zinkoxid | 3 | 3 | 3 | 3 | 3 | 3 | 3 | 3 |
| Ozonschutzwachs²⁾ | 1,5 | 1,5 | 1,5 | 1,5 | 1,5 | 1,5 | 1,5 | 1,5 |
| IPPD³⁾ | 1 | 1 | 1 | 1 | 1 | 1 | 1 | 1 |
| TMQ⁴⁾ | 1 | 1 | 1 | 1 | 1 | 1 | 1 | 1 |
| Mineralöl-Weichmacher⁵⁾ | 3 | 3 | 3 | 3 | 3 | 3 | 3 | 3 |
| Schwefel | 1,6 | 1,6 | 1,6 | 1,6 | 1,6 | 1,6 | 1,6 | 1,6 |
| Beschleuniger TBBS⁶⁾ | 2 | 2 | 2 | 2 | 2 | 2 | 2 | 2 |
| Trimerisiertes Hexamethylendiisocyanat⁷⁾ | | 5 | 10 | 15 | | | | |
| Mischung von dimerisiertem und trimerisiertem Hexamethylendiisocyanat⁸⁾ | | | | | 5 | | | |
| Trimerisiertes Hexamethylendiisocyanat blockiert mit Butanonoxim⁹⁾ | | | | | | 5 | 10 | 15 |

| | | | | | | | | |
|---|---|---|---|---|---|---|---|---|
| ¹⁾ TSR 5, Defo 700 | | | | | | | | |
| ²⁾ Mischung von Paraffinen und Mikrowachsen (Antilux® 654 der Rheinchemie Rheinau GmbH) | | | | | | | | |
| ³⁾ N-Isopropyl-N'-phenyl-p-phenylendiamin (Vulkanox® 4010 NA der Bayer AG) | | | | | | | | |
| ⁴⁾ 2,2,4-Trimethyl-1,2-dihydrochinolin (polym.) (Vulkanox® HS der Bayer AG) | | | | | | | | |
| ⁵⁾ Enerthene® 1849-1 der Firma BP Oil GmbH | | | | | | | | |
| ⁶⁾ N-tert.Butyl-2-benzthiazylsulfenamid (Vulkacit NZ® der Bayer AG) | | | | | | | | |
| ⁷⁾ Desmodur N 3300® der Bayer AG | | | | | | | | |
| ⁸⁾ Desmodur N 3400® der Bayer AG | | | | | | | | |
| ⁹⁾ Desmodur BL 3175® der Bayer AG (ohne Lösungsmittel) | | | | | | | | |

Die Vulkansiationsgeschwindigkeiten der Mischungen wurden in einem Rheometerexperiment bei 160°C untersucht. Hierfür wurde das Monsantorheometer MDR 2000E verwendet. Mit Hilfe dieser Messungen wurden folgende charakteristische Daten ermittelt: Fₘᵢₙ; F_{max-Fmin}; t₁₀; t₈₀ und t₉₀.

| Mischungs-Nr.: | 1 | 2 | 3 | 4 | 5 | 6 | 7 | 8 |
|---|---|---|---|---|---|---|---|---|
| Fₘᵢₙ [dNM] | 0,5 | 1,18 | 1,32 | 1,81 | 1,09 | 0,55 | 0,43 | 0,4 |
| F_{max-Fmin} [dNM] | 10,06 | 9,61 | 9,54 | 9,56 | 9,63 | 10,02 | 10,35 | 10,79 |
| t₁₀ [min.] | 5,04 | 3,71 | 3,36 | 3,46 | 3,01 | 2,39 | 2,07 | 1,93 |
| t₈₀ [min.] | 7,41 | 6,23 | 5,69 | 6,06 | 5,61 | 4,54 | 4,65 | 5,55 |
| t₉₀ [min] | 9,03 | 7,55 | 6,79 | 7,06 | 6,7 | 5,59 | 6,09 | 7,9 |

Die Mischungen wurden innerhalb von 20 Min. bei 160°C in der Presse vulkanisiert. An den Vulkanisaten wurden folgende Daten ermittelt:

| Mischungs-Nr.: | 1 | 2 | 3 | 4 | 5 | 6 | 7 | 8 |
|---|---|---|---|---|---|---|---|---|
| Zugfestigkeit (F) [MPa] | 26,9 | 27,7 | 24,5 | 21,6 | 26,8 | 25,9 | 24,2 | 21,4 |
| Bruchdehnung (D) [%] | 640 | 525 | 455 | 375 | 525 | 635 | 600 | 545 |
| Spannungswert bei 100% Dehnung (S₁₀₀) [MPa] | 1,3 | 2,1 | 2,2 | 2,5 | 2,3 | 1,6 | 1,9 | 2,2 |
| Spannungswert bei 300 % Dehnung (S₃₀₀) [MPa] | 4,1 | 8,3 | 10,6 | 14,2 | 8,3 | 5,2 | 6,2 | 7,3 |
| Härte Shore A/23°C | 54 | 61 | 62 | 64 | 60 | 58 | 58 | 59 |
| Härte Shore A/70°C | 49 | 53 | 55 | 57 | 53 | 50 | 51 | 51 |
| Rückprallelastizität/23°C [%] | 47 | 47 | 51 | 53 | 47 | 49 | 48 | 49 |
| Rückprallelastizität/70°C [%] | 66 | 64 | 65 | 65 | 62 | 66 | 63 | 66 |
| Abrieb 60er Schmirgel [mm³] | 134 | 87 | 77 | 62 | 77 | 109 | 117 | 123 |
| S₃₀₀xD | 2.624 | 4.358 | 4.823 | 5.325 | 4.358 | 3.302 | 3.720 | 3.979 |

### Ergebnis:

Im Vergleich mit dem diisocyanatfreien Vergleichsvulkanisat werden sowohl mit trimerisiertem Diisocyanat als auch mit einer Mischung von dimerisiertem und trimerisiertem Diisocyanat sowie mit einem trimerisierten blockierten Diisocyanat verbesserte mechanische Eigenschaften (S₃₀₀ xD) sowie niedrigere Abriebwerte gefunden.

### Mischungsserie D:

Auf einer Laborwalze werden folgende Bestandteile der Kautschukmischung entsprechend der in der Tabelle angegebenen Reihenfolge (Mengenangaben in phr) gemischt.

| Mischungs-Nr.: | 1 | 2 | 3 | 4 |
|---|---|---|---|---|
| Mastizierter Naturkautschuk¹⁾ | 100 | 100 | 100 | 100 |
| Hydroxylmodifiziertes SBR-Gel (OBR 1031) | 30 | 30 | 30 | 30 |
| Stearinsäure | 3 | 3 | 3 | 3 |
| Zinkoxid | 3 | 3 | 3 | 3 |
| Ozonschutzwachs²⁾ | 1,5 | 1,5 | 1,5 | 1,5 |
| IPPD³⁾ | 1 | 1 | 1 | 1 |
| TMQ⁴⁾ | 1 | 1 | 1 | 1 |
| Mineralöl-Weichmacher⁵⁾ | 3 | 3 | 3 | 3 |
| Schwefel | 1,6 | 1,6 | 1,6 | 1,6 |
| Beschleuniger TBBS⁶⁾ | 2 | 2 | 2 | 2 |
| Diphenylmethan-4, 4'-Diisocyanat (MDI)⁷⁾ | | 5 | | |
| Mischung aus ca. 50% MDI und ca. 50% polymerisiertem MDI⁸⁾ | | | 5 | |
| Mischung aus 30% MDI und 70% polymerisiertem MDI⁹⁾ | | | | 5 |

| | | | | |
|---|---|---|---|---|
| ¹⁾ TSR 5, Defo 700 | | | | |
| ²⁾ Mischung von Paraffinen und Mikrowachsen (Antilux® 654 der Rheinchemie Rheinau GmbH) | | | | |
| ³⁾ N-Isopropyl-N'-phenyl-p-phenylendiamin (Vulkanox® 4010 NA der Bayer AG) | | | | |
| ⁴⁾ 2,2,4-Trimethyl-1,2-dihydrochinolin (polym.) (Vulkanox® HS der Bayer AG) | | | | |
| ⁵⁾ Enerthene® 1849-1 der Firma BP Oil GmbH | | | | |
| ⁶⁾ N-tert.Butyl-2-benzthiazylsulfenamid (Vulkacit NZ® der Bayer AG) | | | | |
| ⁷⁾ Desmodur N 44M® der Bayer AG (MDI) | | | | |
| ⁸⁾ Desmodur N 44 V 20 LF® der Bayer AG | | | | |
| ⁹⁾ Desmodur 44 V 40 L® der Bayer AG | | | | |

Die Vulkansiationsgeschwindigkeiten der Mischungen wurden in einem Rheometerexperiment bei 160 °C untersucht. Hierfür wurde das Monsantorheometer MDR 2000E verwendet. Mit Hilfe dieser Messungen wurden folgende charakteristische Daten ermittelt: Fₘᵢₙ; F_{max-Fmin}; t₁₀; t₈₀ und t₉₀.

| Mischungs-Nr.: | 1 | 2 | 3 | 4 |
|---|---|---|---|---|
| Fₘᵢₙ [dNM] | 0,5 | 1,28 | 1,61 | 1,50 |
| F_{max-Fmin} [dNM] | 10,06 | 9,64 | 9,33 | 9,31 |
| t₁₀ [min.] | 5,04 | 6,53 | 8,26 | 8,42 |
| t₈₀ [min.] | 7,41 | 10,21 | 12,55 | 12,56 |
| t₉₀ [min] | 9,03 | 12,30 | 14,07 | 14,07 |

Die Mischungen wurden bei 160°C in der Presse vulkanisiert.

| Mischungs-Nr.: | 1 | 2 | 3 | 4 |
|---|---|---|---|---|
| Vulkanisationszeit [min] | 20 | 16 | 24 | 24 |

An den Vulkanisaten wurden folgende Daten ermittelt:

| Mischungs-Nr.: | 1 | 2 | 3 | 4 |
|---|---|---|---|---|
| Zugfestigkeit (F) [MPa] | 26,9 | 28,4 | 28,2 | 26,6 |
| Bruchdehnung (D) [%] | 640 | 640 | 565 | 530 |
| Spannungswert bei 100 % Dehnung (S₁₀₀) [MPa] | 1,3 | 1,4 | 1,7 | 1,8 |
| Spannungswert bei 300 % Dehnung (S₃₀₀) [MPa] | 4,1 | 5,0 | 7,1 | 7,6 |
| Härte Shore A, 23 °C | 54 | 59 | 55 | 53 |
| Härte Shore A, 70 °C | 49 | 53 | 53 | 54 |
| Rückprallelastizität, 23 °C [%] | 47 | 50 | 52 | 51 |
| Rückprallelastizität, 70 °C [%] | 66 | 67 | 68 | 69 |
| Abrieb 60er Schmirgel [mm3] | 134 | 103 | 92 | 98 |
| S₃₀₀ xD | 2.624 | 3.200 | 4.012 | 4.028 |

### Ergebnis:

Im Vergleich mit dem diisocyanatfreien Vergleichsvulkanisat werden sowohl mit Zusätzen von Diphenylmethan-4,4'-Diisocyanat (MDI als auch mit Mischungen von monomerem MDI mit polymerisiertem MDI verbesserte mechanische Eigenschaften (S₃₀₀ xD) sowie niedrigere Abriebwerte gefunden.

## Patentansprüche

1. Kautschukmischungen bestehend aus nicht vernetzten, doppelbindungshaltigen Kautschuken (A), vernetzten Kautschukpartikeln (B) sowie multifunktionellen Isocyanaten (C), wobei, jeweils bezogen auf 100 Gew.-Teile (phr) der Kautschukkomponente (A), der Anteil in der Mischung an Komponente (B) 1 bis 150 Gew.-Teile und der Anteil an multifunktionellen Isocyanaten (Komponente C) 1 bis 100 Gew.-Teile beträgt, und wobei die vernetzten Kautschukpartikel (B) Teilchendurchmesser von 5 bis 1000 nm und Quellungsindices in Toluol von 1 bis 15 und die multifunktionellen Isocyanate (C) mindestens zwei Isocyanatgruppen in Molekül aufweisen.

2. Kautschukmischungen nach Anspruch 1, **dadurch gekennzeichnet, dass** jeweils bezogen auf 100 Gew.-Teile der Kautschukkomponente (A) 5 bis 100 Gew.-Teile an vernetzten Kautschukpartikeln (B) und 3 bis 50 Gew.-Teile an multifunktionellen Isocyanate (C) in der Kautschukmischung vorhanden sind.

3. Verwendung der Kautschukmischungen nach Anspruch 1 zur Herstellung von Kautschukvulkanisaten.

4. Verwendung der Kautschukmischungen nach Anspruch 1 zur Herstellung von Kautschukformkörpern aller Art, insbesondere zur Herstellung von Kabelmänteln, Schläuchen, Treibriemen, Förderbändern, Walzenbeschlägen, Reifenbauteilen, Schuhsohlen, Dichtungsringen, Dämpfungselementen sowie Membranen.

## Claims

1. Rubber mixtures composed of uncrosslinked, double-bond-containing rubbers (A), crosslinked rubber particles (B) and multifunctional isocyanates (C) wherein the amount of component (B) in the mixture is from 1 to 150 parts by weight and the amount of multifunctional isocyanates (component C) is from 1 to 100 parts by weight, in each case based on 100 parts by weight (phr) of the rubber component (A), and wherein the crosslinked rubber particles (B) have particle diameters of from 5 to 1000 nm and swelling indices in toluene of from 1 to 15 and the multifunctional isocyanates (C) contain at least two isocyanate groups in the molecule.

2. Rubber mixtures according to Claim 1, **characterized in that** crosslinked rubber particles (B) are present at from 5 to 100 parts by weight and multifunctional isocyanates (C) at from 3 to 50 parts by weight in the rubber mixture, in each case based on 100 parts by weight of the rubber component (A).

3. Use of the rubber mixtures according to Claim 1 for producing rubber vulcanizates.

4. Use of the rubber mixtures according to Claim 1 for producing moulded rubber bodies of all kinds, especially for producing cable sheaths, hoses, drive belts, conveyor belts, roller coverings, tyre components, shoe soles, gaskets, damping elements and membranes.

## Revendications

1. Mélanges de caoutchoucs, consistant en des caoutchoucs (A) non réticulés, contenant des doubles liaisons, en des particules de caoutchouc réticulé (B), ainsi qu'en des isocyanates multifonctionnels (C), sachant que, rapporté à 100 parties en poids (pour cent) du composant caoutchouc (A), la quote-part dans le mélange en le composant (B) est de 1 à 150 parties en poids et la quote-part dans le mélange en les isocyanates multifonctionnels (composant C) est de 1 à 100 parties en poids, et sachant que les particules de caoutchouc réticulé (B) présentent des diamètres de particule de 5 à 1000 nm et des indices de gonflement dans le toluène de 1 à 15, et que les isocyanates multifonctionnels (C) comportent au moins deux groupes isocyanates dans la molécule.

2. Mélanges de caoutchoucs selon la revendication 1, **caractérisés en ce que**, rapportés respectivement à 100 parties en poids du composant (A) du caoutchouc, il y a dans le mélange de caoutchoucs 5 à 100 parties en poids de particules de caoutchouc réticulé (B) et 3 à 50 parties en poids d'isocyanates multifonctionnels (C).

3. Utilisation des mélanges de caoutchoucs selon la revendication 1 à la fabrication de caoutchoucs vulcanisés.

4. Utilisation des mélanges de caoutchoucs selon la revendication 1 à la fabrication de pièces en caoutchouc moulé de toutes sortes, en particulier à la fabrication de gaines de câbles, de tuyaux, de courroies d'entraînement, de bandes transporteuses, de garnitures de rouleaux, de composants de pneumatiques, de semelles de chaussures, de joints d'étanchéité, d'éléments amortisseurs ainsi que de membranes.
